# EUROPEAN PATENT APPLICATION

(11) **EP 4 660 375 A1**
(43) Date of publication of application: **10.12.2025**
(21) Application number: 25181128.7
(22) Date of filing: 05.06.2025
(51) Int. Cl.: E01F 13/12, E01F 9/654

(54) **FOLDABLE PORTABLE BARRIERS**

(30) Priority: 05.06.2024 US 202463656582 P; 04.06.2025 US 202519228233
(71) Applicant: Delta Scientific Corporation, Palmdale, CA 93551 (US)
(72) Inventor: Dickinson, David G., La Canada Flintridge, CA 91011 (US); Bobrosky, Keith, Palmdale, CA 93551 (US); Grace, Matthew Craig, Encino, CA 91316 (US); Owens, Matthew, Glendale, CA 91208 (US)
(74) Representative: Dilg, Haeusler, Schindelmann Patentanwaltsgesellschaft mbH

(57) **Abstract**

A foldable portable barrier (10) includes a base (12), a barrier arm (14) pivotably coupled to the base for pivoting between a stowed position relative to the base and a deployed position, a first side arm (16) pivotably coupled to the base for pivoting between a stowed position over the barrier arm when stowed and a deployed position, and a second side arm (18) pivotably coupled to the base for pivoting between a stowed position over the first arm when stowed and a deployed position.

## Description

### CROSS REFERENCE TO RELATED APPLICATION

This application is based upon and claims priority to U.S. Provisional Application no. 63/656,582, filed on June 5, 2024, the contents of which are fully incorporated herein by reference.

### BACKGROUND

Barriers are commonly deployed to protect individuals and/or property against attack by a vehicle, such as a truck bomb attack vehicle. Many barriers are partly embedded into the ground or are otherwise attached to the ground. However, excavation or attachment to the roadway surface is both costly and time-consuming, which inhibits rapid deployment of the barricade. As a result, portable barriers have been developed. However, portable barriers require a lot of space to be housed in when not in use, and large vehicles for moving multiple such portable barriers to the desired locations.

### SUMMARY

In an example embodiment a foldable portable barrier includes a base, a barrier arm pivotably coupled to the base for pivoting between a stowed position and a deployed position relative to the base, a first side arm pivotably coupled to the base for pivoting between a stowed position over the barrier arm when stowed and a deployed position, and a second side arm pivotably coupled to the base for pivoting between a stowed position over the first arm when stowed and a deployed position, wherein the barrier is portable. In another example embodiment, the barrier further includes a first locking member coupled to the barrier arm. The first locking member engages with the first side arm when the first side arm and the barrier arm are in the deployed positions for retaining the first side arm and the barrier arm in their deployed positions. In yet another example embodiment, the barrier also includes a second locking member coupled to the barrier arm for engaging the second side arm when the second side arm and the barrier arm are in the deployed positions for retaining the second side arm and the barrier arm in their deployed positions. In a further example embodiment, the barrier further includes a shaft coupled to the barrier arm, wherein each of the first and second locking members are slidably received is the shaft. In yet a further example embodiment, each of the barrier arm, first side arm and second side arm are plate members. In one example embodiment, the barrier also includes an opening proximate a distal end of the barrier arm for defining a handle for pivoting the barrier arm to the deployed position. In another example embodiment, the base includes blocks, wherein the first and second side arms are pivotably connected to the blocks. In yet another example embodiment, the base includes a depressed section, and a portion of the barrier arm is received in the depressed section when the barrier arm is in the deployed position. In a further example embodiment, each of the first and second side arms include an end, wherein the end of each of the first and second side arms is ratcheted defining a series of upwardly extended spikes. In yet a further example embodiment, when barrier arm, the first side arm and the second side arm are in the deployed positions, a distal end of the barrier arm and the ratcheted ends of the first and second side face in the same direction. In one example embodiment, the direction is a direction of expected impact. In a further example embodiment, the barrier also includes a first cover for covering the ratcheted end of the first side arm, and a second cover for covering the ratcheted end of the second side arm, such that the first and second covers are configured for being pierced by the upwardly extending spikes upon impact by a vehicle. In another example embodiment, the first and second side arms include an opening, and when both the first and second side arms are in a stowed position, these openings are axially aligned for receiving a pin. In yet another example embodiment, the base includes a longitudinally extending first channel, and a longitudinally extending second channel spaced apart from the first channel. With this example embodiment, each of the first and second channels includes a web, a first leg extending from the web and a second leg extending from the web spaced apart from the first leg. With this example embodiment, the first leg of each cannel defines at least a portion of a side of the base, and a base plate interconnects the first channel with the second channel, such that the base plate and the second leg of the first and second channels define a depression. In a further example embodiment, the base further includes a first side strip extending over the first channel and together with the first leg of the first channel define a first side of the base. The base also includes a second side strip extending over the second channel and together with the first leg of the second channel define a second side of the base. With this example embodiment, a first block is coupled to the web of the first channel and the first side strip, and a second block is coupled to the web of the second channel and the second side strip. A first hinge is coupled to the first block and the first side arm such that the first side arm pivots between and stowed and a deployed position about the first hinge, and a second hinge is coupled to the second block and the second side arm such that the second side arm pivots between and stowed and a deployed position about the second hinge. In yet a further example embodiment, the first side arm and the second side arm are trapezoidal shaped plates. A base end of the first side arm is generally aligned with a distal end of the first side strip and a base end of the second side arm is generally aligned with a distal end of the second side strip. In one example embodiment, the barrier arm is a plate including a main section and a projection extending from the main section such that the main section and the projection extend along a plane. In another example embodiment, the barrier also includes, a third block mounted on the web of the first channel, a fourth block mounted on the web of the second channel, a fifth block mounted on a surface of the projection of the barrier arm and being adjacent to the third block, a sixth block mounted on the surface of the projection of the barrier arm and being adjacent to the fourth block and spaced apart from the fifth block, a first pivot pin coupling the fifth and third blocks, and a second pivot pin coupling the sixth and the fourth blocks such that the barrier arm is pivotable about the first and second pivot pins from a stowed position to a deployed position, and when in the deployed position, at least a part of the projection is received in the depression. In yet another example embodiment, the base has a leading end for facing an expected impact direction and a trailing end opposite the leading end, and the third and fourth blocks are at, or proximate, the trailing end. With this example embodiment, each of the side arms is a plate having a leading end facing the expected impact direction, and when in the deployed position the leading end of each side arm extends upward from the base and is inclined at an acute angle relative to the base. In a further example embodiment, the leading ends of the first and second side arms are ratcheted defining a series of upwardly extended spikes. In yet a further example embodiment, the barrier also includes at least a first spring coupled to the first side arm and the base for assisting in pivoting the first side arm towards its deployed position, and at least a second spring coupled to the second side arm and the base for assisting in pivoting the first side arm towards its deployed position. In one example embodiment, the barrier further includes at least a spring coupled to the barrier arm and the base for assisting in pivoting the barrier arm toward its deployed position. In another example embodiment the base includes a first side, a second side opposite the first side, a third side extending between the first and second sides, and a fourth side opposite the third side and extending between the first and second sides, and a pair of openings are defined on the first side for receiving a pair of prongs from a palette jack or fork-lift for lifting and moving the barrier. In yet another example embodiment, the barrier also includes a pair of openings through the third side receiving a pair of prongs from a palette jack or fork-lift for lifting and moving the barrier.

### BRIEF DESCRIPTION OF THE DRAWINGS

FIG. 1A is a perspective view of an example embodiment foldable portable barrier in the deployed position.
FIG. 1B is a perspective view of another example embodiment foldable portable barrier in the deployed position.
FIG. 1C is a perspective exploded view of the example embodiment foldable potable barrier shown in FIG. 1C.
FIG. 2 is a perspective view of the example foldable portable barrier shown in FIG. 1A in a stowed position.
FIG. 3 is a perspective exploded view of the example embodiment foldable portable barrier shown in FIG. 1A without one side arm and a barrier arm in the stowed position.
FIG. 4 is a perspective exploded view of the example embodiment foldable portable barrier shown in FIG. 1A without the side arms.
FIG. 5 is a perspective view partially exploded view of the example foldable portable barrier shown in FIG. 1A in a deployed but not locked position.
FIG. 6 is a perspective view of an example embodiment transporter used to transport the example embodiment foldable portable barriers shown in FIGS. 1A and 1B.
FIG. 7 is a perspective view of an example embodiment torsion spring that may be incorporated in the example embodiment foldable portable barriers shown in FIGS. 1A and 1B.
FIG. 8 is a perspective assembly view of the barrier arm to the base of the example embodiment foldable barrier shown in FIG. 1B.
FIG. 9 is a plan view of the rubber strips that are incorporated on the base of example embodiment foldable portable barriers.

### DESCRIPTION

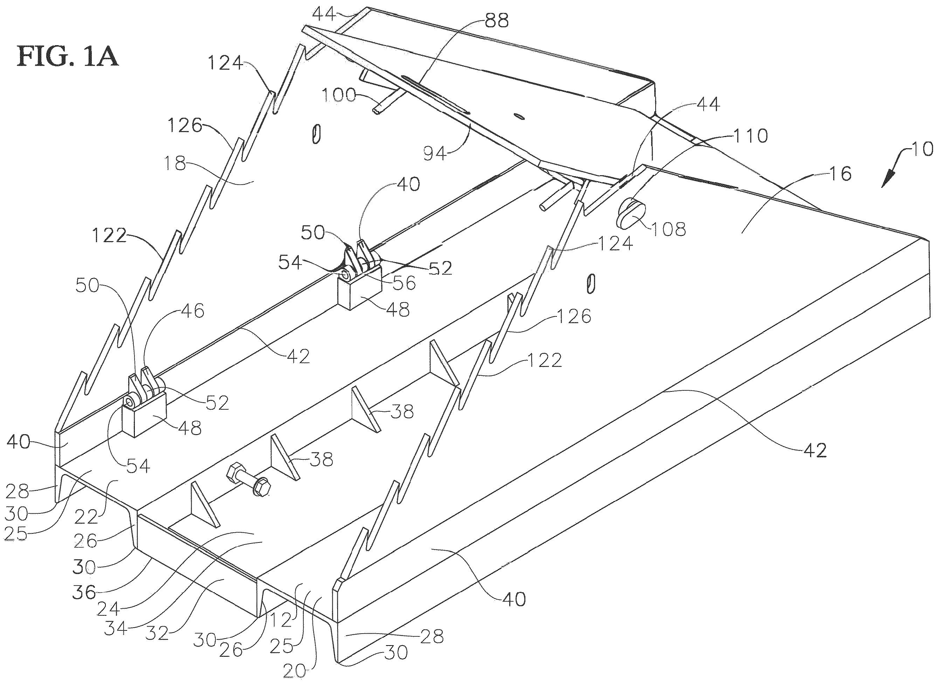

In an example embodiment a foldable barrier 10 includes a base 12, a folding barrier arm 14 pivotably coupled to the base and two folding side arms 16, 18 pivotably coupled to the base, as for example shown in FIG. 1A. In an example embodiment, the base defines the structure that supports the barrier on a surface. While the base can have various shapes and may have a surface and/or feet for contacting the ground, in the shown example embodiment, the base 12 is rectangular and is defined by two spaced part channels 20, 22 interconnected by a center base plate 24. Each of the channels has a web 25 and two legs, an inner leg 26 closer to the center of the defined base and an outer leg 28 further from the center, extending from opposite sides of the web. The distal ends 30 of the legs distal from their corresponding webs are for facing the ground. In the shown example embodiment, the center base plate 24 has opposite end portions 32 bent upwards along the direction of the legs. The center base plate has an inner surface 34 opposite an outer surface 36. The outer surface is for facing the ground. Gussets 38 may be used for connecting the base plate to the channels 20, 22. In an example embodiment as shown, each gusset is attached (e.g., welded) to the inner surface of the base plate and an outer surface of an inner leg of a channel.

In an example embodiment, side strips 40 are connected (e.g., welded or fastened) to the web 25 of each channel 20, 22 so as to be aligned with the outer leg 28 of each channel. Each side strip extends along its corresponding channel and in a direction opposite its corresponding outer leg 28. In the shown example embodiment, each side strip extends along the entire length of its corresponding channel. In other example embodiments, each side strip extends along a portion of the length of its corresponding channel. In other example embodiments, multiple shorter side strips may be connected to each channel.

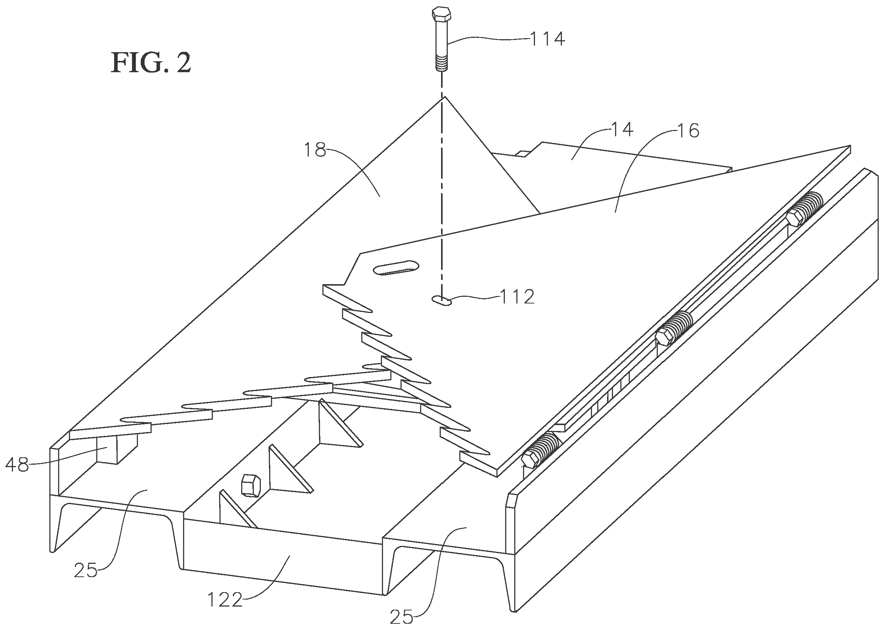

In an example embodiment, each side arm 16, 18 is a trapezoidal shaped plate structure having a longer base end 42 and a shorter top end 44. Each side arm can have other geometric shapes. For example, it can be rectangular, square, triangular, etc. In the shown example embodiment, the base end 42 of each side arm extends along the entire length of the channels defining the base. In other example embodiments, the base end of each side arm may shorter or longer. In the shown example embodiment, the base ends 42 of the side arms are coupled to the base using hinges 46. In the shown example embodiment, spaced apart support blocks 48 are connected to each corresponding channel web 25 and side strip 40. Hinge knuckles 50 are connected to each side arm proximate such side arm base end 42 and knuckles 52 are connected to each support block 48 such that the knuckles 50 connected to each side arm correspond to knuckles 52 connected to each corresponding block. The hinge knuckles 50 connected to each side arm mesh with corresponding knuckles 52 connected to each block. A hinge pin 54 penetrates the meshed knuckles forming hinge 46. The hinge pin may be threaded to the distal most knuckle it penetrates so as to be retained axially, or it may be bolt that penetrates the knuckles. In such case, a nut is threaded to the distal end portion of the bolt penetrating the knuckles. The side arms are then able to pivot about the hinges from an upright position to a folded or stowed position as shown in FIG. 2 about the pins. In the shown example embodiment, three sets of knuckles are connected to each side arm and the mesh with three corresponding sets of knuckles mounted on three blocks. It should be understood that more or fewer hinges may be used in other embodiments. It should also be understood that more or less blocks may be used. For example, one long block may be used for each side arm that can accommodate multiple sets of knuckles. Moreover, blocks may not be used and the knuckles are directly connected to the side strips. Moreover, other ways of pivotably coupling the side arms to the base may be used.

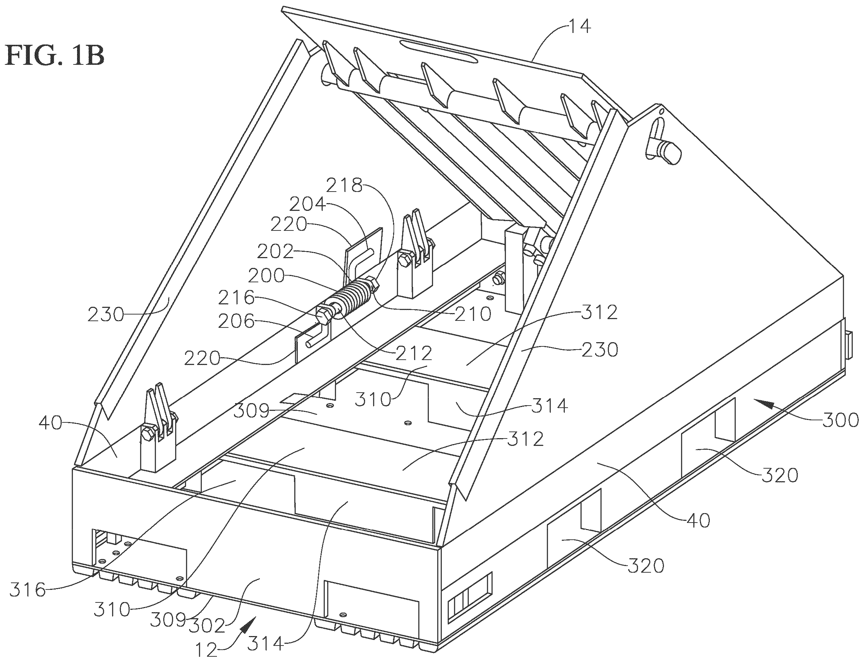

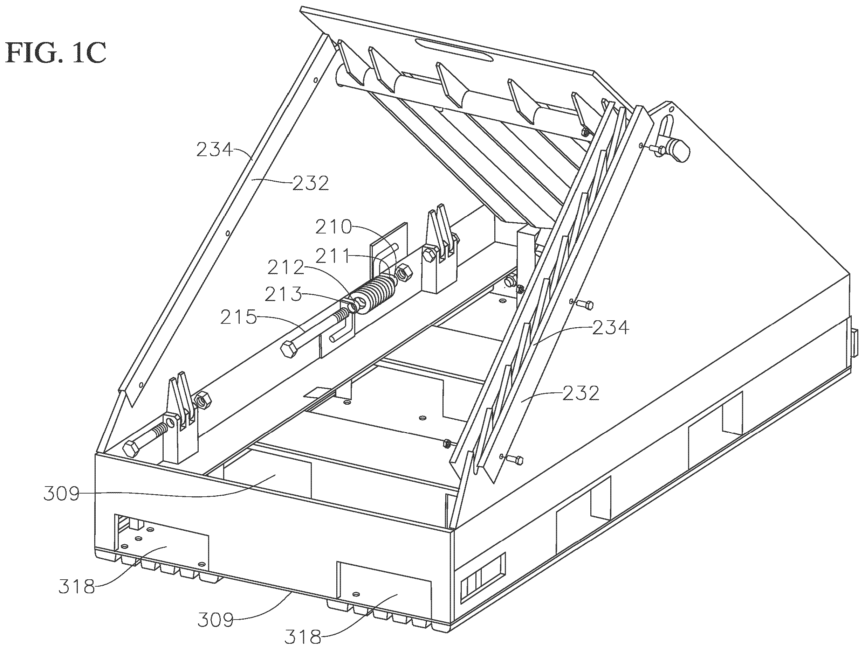

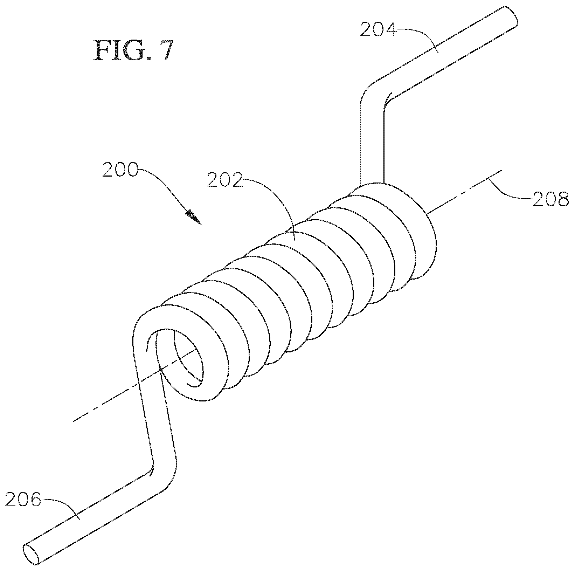

In an example embodiment, a spring 200 is coupled to each side arm 16, 18 proximate its base end and to the base 12, as for example shown in FIG. 1B and 1C. In the shown example embodiment, each spring is a torsion spring. These springs help reduce the force required to extend each arm to the deployed position. However, in an example embodiment, the weight of each side arm should be sufficient to overcome the force generated by the springs so that each side arm can close relative to the base to its stowed position. Each spring has an elongated coiled body 202 and two opposing end portions 204, 206 extending in opposite directions and which are oppositely spaced apart from, and generally parallel to, a central longitudinal axis 208 of the spring, as for example shown in FIG. 7. In an example embodiment, two spaced projections 210, 212 extend from each side strip 40 having axially aligned openings 211, 213. The spring 200 fits between the two projections having the axially aligned axial openings. A elongate bolt 215 is fitted through one of the projection openings, through spring coiled body and through the other projection opening. A nut 218 is threaded or otherwise coupled to an end portion of the bolt penetrating the distal projection opening preventing the bolt from withdrawing from the projections and the spring. In an example embodiment, the bolt is threaded to the projection opening penetrated by the distal end of the bolt and as such a nut is not necessary. In another example embodiment, instead of a bolt, a pin is used and a nut is threaded on each end of the pin penetrating a corresponding opening of the projections for preventing the pin from withdrawing from the projections and spring. When mounted through the openings of the projections 210, 212, each bolt or pin extends along the axis of rotation of each corresponding arm. When mounted, one end portion 206 of each spring bears against its corresponding base side strip 40 and the other end portion 204 of the spring bears against its corresponding side arm. Pads 220 may be attached at the areas in which the end portions engage the base and the side arm for increased wear strength. In other example embodiments, each spring may be coupled to its corresponding base and side arm by having one of its end portions rotationally couped to the base and another end portion rotationally coupled to its corresponding side arm.

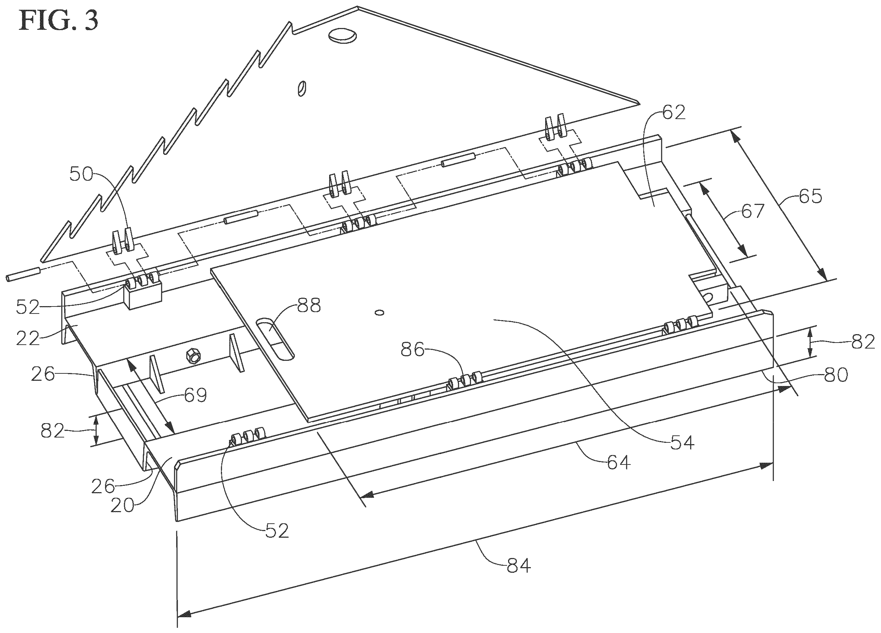

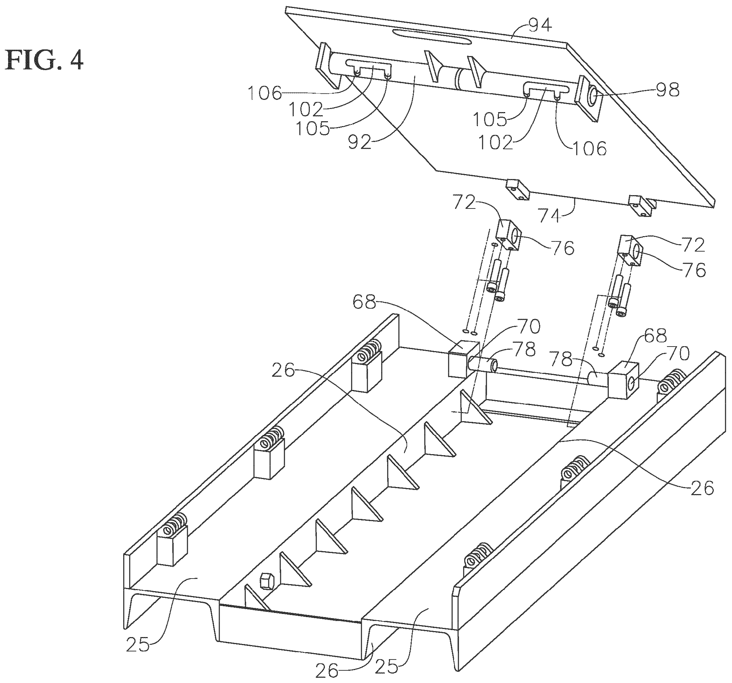

In an example embodiment, as for example shown in FIGS. 1A, 1B, and 2, the barrier arm 14 is a plate structure. In the shown example embodiment, it is a rectangular plate. However, it may also have other geometric shapes. For example, it can be square. In an example embodiment, the barrier arm is sized such that when it is in the folded, i.e., stowed position, it fits between the hinges 46 of the opposite side arms. In one example embodiment, the barrier arm is sized such that when in the stowed position, it rests on portions 56 of the blocks 48 not occupied by the hinge knuckles 52, as for example shown in FIG. 3. In the shown example embodiment, the barrier arm includes a rectangular section 58 and a projecting section 62 extending from an end of the rectangular section, as for example shown in FIG. 3. In an example embodiment, as shown in FIG. 3, the projecting section 62 is also a plate section that is integral and coplanar with the rectangular section 58. However, in other example embodiments, the projection may not be co-planar. The barrier arm has a length 64 along the length of the channels and a width 65 transverse to such length 64. In the shown example embodiment, the width 67 of the of the projection is smaller than the spacing 69 between the interior legs 26 of the two channels 20, 22. The projecting section is pivotably coupled to the base so that the barrier arm can pivot (i.e., rotate) from a deployed to a stowed position. A pivot support 68 is mounted on each of the channel webs 25 proximate the ends of the webs, as for example shown in FIG. 4. In the shown example embodiment, each pivot support is seated entirely on the web. Each of the pivot supports includes an opening 70 extending transversely in the pivot support along the direction of the width, i.e., transverse to the channels 20, 22. When both supports are mounted on their corresponding channel webs, the openings of the pivot supports are axially aligned. A pivot block 72 is mounted on an under surface of the projecting section 62 proximate or at a free end 74, of the projecting section 62. In the shown example embodiment, each pivot block 72 is fastened to the projecting section. Each of the pivot blocks 72 includes a transversely extending opening 76. The barrier arm with pivot blocks is positioned so that the pivot blocks are received between the pivot supports such that the openings 70 of the pivot supports are axially aligned with the openings 72 of the pivot blocks. A pivot pin 78 is inserted through each of the pivot blocks and its corresponding pivot support. In this regard the barrier arm is able to pivot about such pivot pins. In the shown example embodiment, when the barrier arm is pivotably coupled to the base and is in the stowed position, the projecting section does not extend to the end of the base closest to the projecting section, as for example shown in FIG. 3. In addition, the length 80 of the projecting section is shorter than the height 82 of the legs of the channels. In this regard when the barrier arm pivots to the deployed position, the projecting section is able to be received and swing within the space between the two channel member inner legs 26 allowing the barrier arm to pivot.

In the shown example embodiment, the overall length of the barrier arm 64 is shorter than the length 84 of the base. In an example embodiment, when deployed position, the barrier arm extends at an angle relative to the base and relative the surface on which the barrier is rested upon that is less than 90 degrees. In one example embodiment this angle of extension is 60 degrees or less and in another example embodiment about 45 degrees. The length of the barrier arm is selected such that when in the deployed position, the barrier arm extends beyond the side arms.

In other example embodiments, the barrier arm may be entirely rectangular or have other shapes and may or may not include a projecting section. With such embodiments, the barrier arm may be pivotably coupled to the base at a location past the base. For example, the pivot supports may be mounted at the end of the base such that they extend beyond the base.

In an example embodiment as shown in FIGS. 1 and 3, a handle or opening 88 is provided on the barrier arm proximate the end opposite the projecting section, to allow the user to manually pivot the barrier arm to the deployed position.

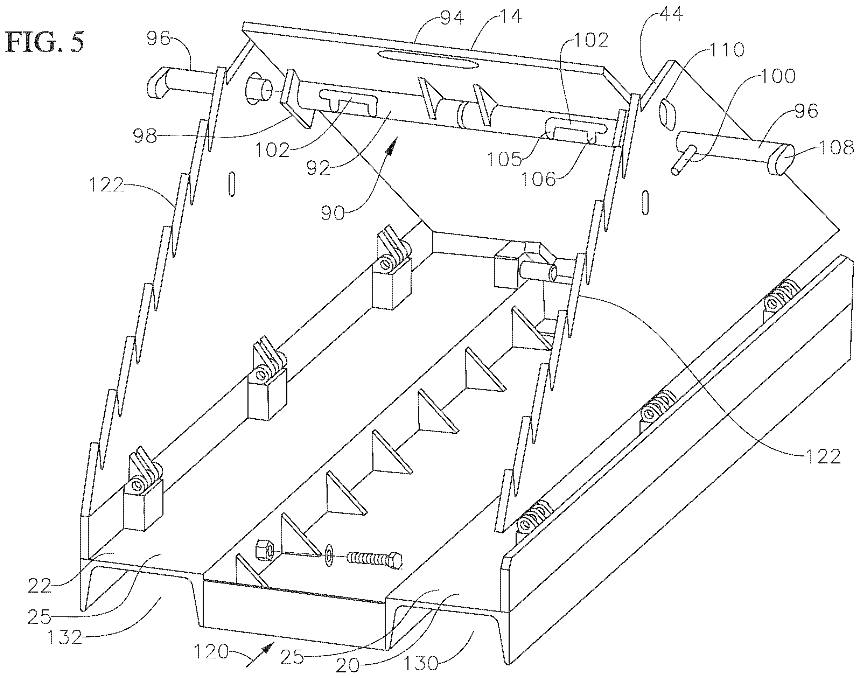

In an example embodiment, a lock mechanism 90 is provided for locking the barrier arm in the deployed position, as for example shown in FIGS. 4 and 5. In the shown example embodiment, the locking mechanism includes a shaft 92, which in the shown example embodiment is tubular. The shaft is mounted to an under surface of the barrier arm proximate its distal end 94. A locking arm 96 is slidably received through each of the opposite ends 98 of the shaft. Each locking arm has a handle 100 that penetrates a slot 102 proximate each end of the shaft. In the shown example embodiment, each slot includes an axial portion 104 extending along the longitudinal axis of the shaft and two spaced apart legs 105, 106 extending from the axial portion. The two legs extend from the opposite ends, or from proximate the opposite ends, of their corresponding slot axial portion. In the shown example embodiment, a first leg 105 extends from the end of each of the slot axial portions further from its corresponding shaft 92 end and a second leg 106 extends proximate the opposite end of the slot axial portion, such that each axial portion extends past the second leg towards its corresponding end of the shaft 92.

An elongated lock member 108 extends transversely from an end of each of the locking arms 96 opposite the end that is received in the shaft 92. Elongate openings 110 are formed on each of the barrier side arms proximate the top end 44 of each side arm to receive a corresponding locking member. When each of the handles are in the axial portion of their corresponding slot, the elongated lock member is oriented with the elongated opening in its corresponding side arm, such that it can be received through such opening. In another example embodiment, instead of one shaft, two separate shafts may be used such that a first shaft accommodates one of the locking arms and a second shaft accommodates the other locking arm.

In an example embodiment spaced apart gussets are mounted, as for example by welding, to the underside of the barrier arm to reinforce the barrier arm, as for example shown in FIG. 1B. In the shown example embodiment, the gussets are traversed by the shaft 92. In an example embodiment, the ends of the gussets facing the expected direction of impact define spikes that under sufficient force may lodge themselves onto the impacting vehicle.

When in the stowed position, the barrier arm 14 rests against the base, as for example the blocks 48 of the base, as for example shown in FIGS. 3 and 4. In addition, when in the stowed position, the first side arm 18 of the two side arms is pivoted over the stowed barrier arm 14 and the second side arm 16 of the two side arms is pivoted over the first side arm. When in the stowed position, the shaft extends above the channel webs 25 and the two locking arms are within their corresponding ends of the shaft with their handle in the first slot leg 105 furthest from its corresponding shaft end. In this regard, the locking arms 96 are locked in the shaft 92 with the lock members close to their corresponding end of the shaft. When in this position, the shaft with the locking arms can be received between the blocks when in the stowed position above the webs 25 of the channels.

To deploy the barrier arm after the barrier is positioned in its desired location, an operator pivots the two side arms to an upright position and lifts the end of the barrier arm using the opening or handle if available to the deployed position. The operator than moves each locking mechanism handle from the first leg and into the axial portion of its slot such that the lock member 108 of locking arm is aligned with its corresponding elongated opening 110 in its corresponding side arm. The operator then slides the handle and thus along the axial portion 102 of its corresponding slot, causing its corresponding locking member to slide and withdraw from the shaft and penetrate the elongated opening 100 in the corresponding side arm from the inner surface and through the outer surface of such corresponding arm. The handle of each locking arm is then positioned into the slot second leg 106 causing its corresponding locking member to misalign with its corresponding elongated opening in its corresponding side arm preventing it from being withdrawn through such corresponding opening. Furthermore, by the handle being in the second leg of the slot, the locking arm is retained from axially moving any significant amount. When at this position, the barrier arm is locked into its deployed position.

To stow the barrier arm, the handle of each locking arm is moved along the second leg 106 and into the axial portion of its corresponding slot and it is slid toward the first leg of its corresponding slot causing its corresponding member to rotate and align with its corresponding lock opening and withdraw from its corresponding lock opening. When the handle reaches the first leg 105 it is moved into the first leg for preventing any significant axial movement of the locking arm. The barrier arm is then lowered into its stowed position and the first side arm is pivoted over the stowed barrier arm and the second side arm is pivoted over the first side arm. In an example embodiment a stowed opening 112 is formed through each of the side arms such that when the second side arm is pivoted over the first side arm, the two stowed openings are aligned, as for example shown in FIG. 2. A pin 114 may then penetrate both stowed openings 112 for keeping both side arms in the stowed position.

When in the deployed position, the barrier is aligned such that the distal end 94 of the barrier arm 14 faces towards the direction 120 of an expected impact. When a vehicle impacts the deployed barrier the vehicle rides up along the ends 122 (referred to herein as the "impact ends" for descriptive purposes) of the side arms facing the impact direction and the barrier arm 14 lodges to the vehicle undercarriage arresting the movement of the vehicle. The barrier may also pivot further jamming itself to the undercarriage of the vehicle.

In an example embodiment, the impact ends 122 of the side arms have a saw tooth configuration having a plurality of teeth (e.g., spikes) 124 extending upwards when the sider arms are in the deployed position defining a "ratchetted end" 126 having upwardly extending spikes. In this regard as the vehicle rides up the ratchetted ends of the side arms the teeth prevent the vehicle from sliding back down. In an example embodiment, as for example shown in FIGS. 1B, 1C, a cover 230 is placed over each ratchetted end to protect the people from accidentally being injured by the spikes forming the ratchetted ends. The cover is made from a soft metal so that upon impact it is penetrated by the spikes. In this regard, the cover protects an operator from getting injured by the spikes when setting the barrier and allows the spikes to penetrate it and lodge into the underside of an impacting vehicle. In an example embodiment, the cover is a strip extending along a side of each side arm such that it covers the spikes from their sides. In another example embodiment, the cover includes a strip 232 and a lip 234 extending transversely from the strip to extend across the tops of the spikes. In another example embodiment, the cover is formed by two strips 232 having transversely extending lips 234 which when brought together define a channel that receives the spikes, as for example shown in FIG. 1C. In another example embodiment, each cover is a channel that receives the spikes. In an example embodiment, each cover is connected to its corresponding side arm by fastening with fasteners. For example, each strip or side of a channel is fastened to a corresponding side arm.

In an example embodiment, the foldable portable barriers are made from mild steel. In an example embodiment that plates forming the foldable barrier are ½ inch thick mild steel. However, in other example embodiments different types of steel and/or thickness of steel or other material may be used depending on the expected impact loads.

When in the stowed position, the foldable portable barriers do not take up a lot of space and can be stacked one on top of the other for transport and storage.

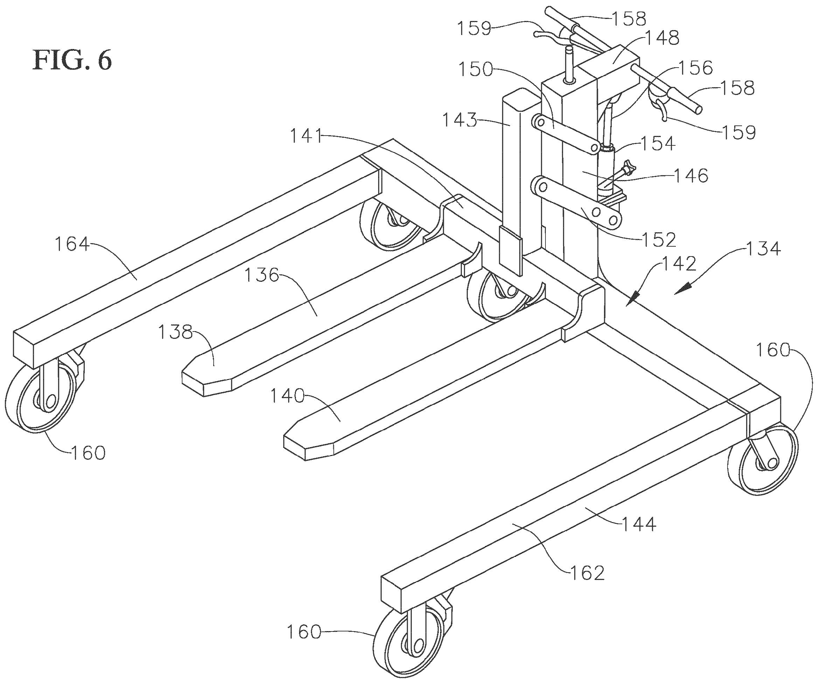

In an example embodiment, use of the two channels 20, 22 allows the foldable barriers to be transported using a standard pallet jack that is received in the channeled spaces 130, 132 defined by the channels 20, 22. In an example embodiment, a transporter 134 is provided to transport the foldable portable barriers, as for example shown in FIG. 6. The transporter includes a pallet jack 136 having prongs 138, 140. The prongs extend in a spaced apart relationship from a transverse member 141. An upright member 143 extends transversely from the transverse member 141. The pallet jack is coupled to a support structure 142 which includes a base 144, a neck 146 extending from the base and a head 148 extending transversely from the base. In the shown example embodiment, a first arm 150 is rotatably coupled to the upright member 143 and to the neck 146. A second arm 152 is rotatably coupled to the upright member proximate its first end below the first arm and to the neck below the first arm. At, or proximate, its opposite end, the second arm is rotatable coupled to a power providing device 154. The power providing device can be an electric device, a pneumatic device or a hydraulic device, or other type of device. The power providing device is coupled at, or proximate, its distal end furthest from the second arm to the head. The power providing device may be extendable of have an extendable member 156, as for example shown in FIG. 6. In this regard when the power providing device expands, as for example when the extendable member expands, it causes the distal end of the second arm to lower causing the opposite end of the second arm to rise. This causes the first arm to also rotate about neck in the same direction as the second arm causing the pallet jack to rise. Similarly, when the power member contracts, it causes the distal end of the second arm to rise and its opposite end to lower. This causes the first arm to also rotate about neck in the same direction as the second arm causing the pallet jack to lower. In an example instead of a single first arm and a single second arm, a pair of first arms and a pair of second arms is used. In this regard the upright member and the neck are between each pair of arms.

Handles 158 may extend from opposite sides of the head 148 and may include up and down levers 159 for controlling the expansion and contraction of the power providing device 154.

The support structure in an example embodiment is supported by wheels 160. To pick up a foldable portable barrier, the transporter is rolled into position with its wheels 160 aligning the first prong 138 with the channeled space 130 of the first channel 20 and the second prong 140 with the channeled space 132 of the second channel 22. Using the up/down levers, the pallet jack is lifted or lowered aligning the prongs in height with their corresponding channeled spaces 130, 132. The transporter is the rolled toward the foldable portable barrier and the prongs 138, 142 are received in the channeled spaces 130, 132, respectively. The levels are then again activated to actuate the power device to expand and thus, raise the foldable portable barrier.

As can be seen in the example embodiment shown in FIG. 6, the base of the support structure includes two legs 162, 164 extending parallel, or generally parallel, to the prongs 138, 140. The spacing between the two legs is such that the prongs (i.e., the pallet jack) can be lowered and raised between the two legs 162, 164. In the shown example embodiment, the spacing between the legs is also greater than the width of the foldable portable barrier when in the stowed position such the foldable portable barriers can be raised and lowered between the two legs of the transporter.

In an example embodiment, the transporter can lift at least three stacked foldable portable barriers. In an example embodiment, the transporter is made of steel using box beams. An example embodiment box beam is a 4 inch by 6 inch beam in cross-section having a thickness of ¼ inch. In other example embodiments, other size of and thickness of steel members may be used.

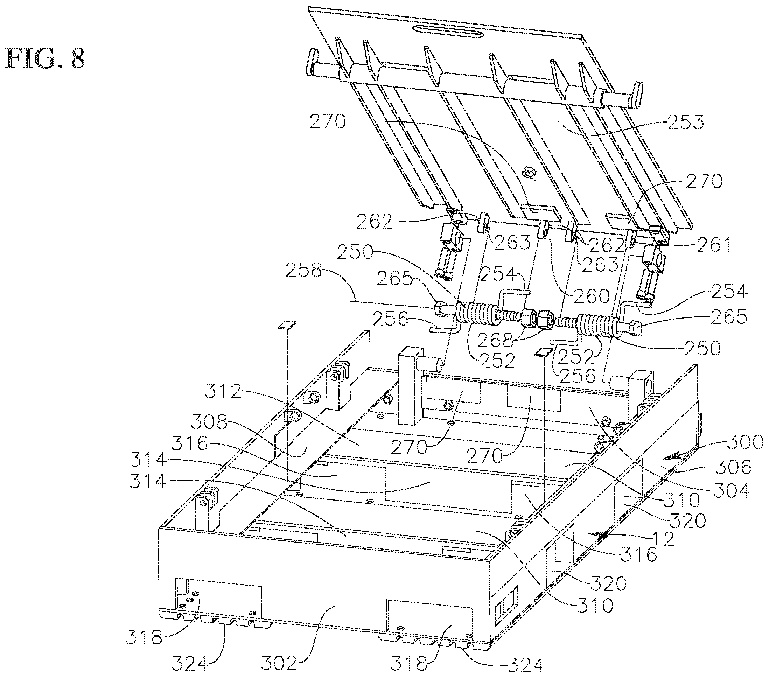

In another example embodiment as shown in FIGS. 1B, 1C and 8, the base 12 has a rectangular frame 300 mounted on a base plate, comprising a front wall 302 for facing the direction of expected impact, a rear wall 304 opposite the front wall and two spaced apart side walls 306, 308 extending from the front wall to the rear wall. An optional base plate 309 extends below the frame. Two spaced apart channels 310, or rectangular beams extend transversely across the frame between the side walls. Each channel or rectangular beam has a web 312 and two spaced apart legs 314 extending transversely from the web extending toward the ground or base plate. Spaced apart openings 316 are formed through the spaced apart legs. These openings 316 formed through each channel or rectangular beam leg are axially aligned with corresponding opening formed through the other channel or rectangular beam legs. Spaced apart openings 318 are also formed through the front wall 302 of the frame, which are also axially aligned with the spaced apart openings 316 formed through the channels or beams. The spaced apart openings are spaced apart at a desired distance such that each prong of a fork lift or a pallet jack, such as for example prongs 138, 140, as for example shown in FIG. 6, can be received in the axially aligned spaced apart openings for lifting the barrier. In an example embodiment, the distance between the sets of axial openings is equal to the distance between the prongs. Similarly, spaced apart openings 320 are formed through the sides of the frame and are aligned with channels 310 or the rectangular beams. These openings on the sides of the frame are also spaced to receive the prongs of a fork lift or a pallet jack for lifting the barrier. With this example embodiment, the barrier may be lifted from its front or its sides. In addition, with this example embodiment, the side strips 40 are mounted adjacent and axially over the sidewalls of the frame and over the webs of the channels or beams. These provide a surface for supporting the blocks.

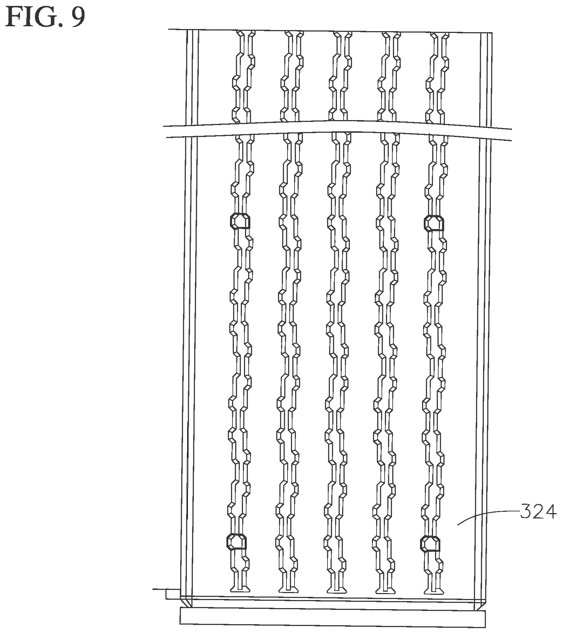

In an example embodiment, in order to provide further friction to prevent the sliding of the foldable barrier rearwards upon impact, rubber feet may be mounted on the bottom of the base, as for example on the base plate 309. In an example embodiment two strips 324 of rubber are attached to the bottom of the base, with a strip of rubber adjacent to a side wall. In example embodiment, as shown in FIG. 9, each strip is a strip of a tire tread. In an example embodiment, part of each strip of rubber may be wrapped to extend over the rear wall 304. These strips rubber in the shown example embodiment form the rubber feet.

In another example embodiment one or more springs 250 may be incorporated to assist in the lifting of the barrier arm to its deployed position. In an example embodiment, the weight of the barrier arm overcomes the force generated by the springs so as to allow the barrier arm to be moved to the stowed position under its own weight. In the example embodiment shown in FIG. 8, two torsion springs 250 are used. These springs are similar, or the same, as the springs 200 utilized to assist with the deployment of the side arms. The springs 250 also have an elongated coiled body 252 and two opposing end portions 254, 256 extending in opposite directions and which are oppositely spaced apart from, and generally parallel to, a central longitudinal axis 258 of the spring, as for example shown in FIG. 8. In an example embodiment, two sets of two spaced projections 260, 262 extend from a lower surface 253 of the barrier arm proximate the barrier arm end closet to its pivoting axis 258. These spaced apart projections have axially aligned openings 261, 263. Each spring 250 fits between the two projections of its corresponding set of projections having the axially aligned openings 261, 263. An elongate bolt 265 is fitted through one of the projection openings, through spring and through the other projection opening of each set. A nut 268 is threaded or otherwise coupled to an end portion of the bolt penetrating the distal projections opening preventing the bolt from withdrawing from the projections and the spring. In an example embodiment, the bolt is threaded to the projection opening penetrated by the distal end of the bolt and as such a nut is not necessary. In another example embodiment, instead of a bolt, a pin is used and a nut is threaded on each end of the pin penetrating the openings of the projection for preventing the pin from withdrawing from the projections and spring. When mounted through the openings of the projections 260, 262, each bolt 265 or pin extends along the axis of rotation 258 of the barrier arm. When mounted, one end portion 254 of each spring bears against the undersurface 253 of the barrier arm and the other end portion 256 of the spring bears against the rear wall 304 of the frame. Pads 270 may be attached at the area in which the end portions 254. 256 of the springs engage the undersurface of the barrier arm and the rear wall of the frame to increase wear resistance. In other example embodiments, each spring may be coupled to undersurface of the barrier arm and to the rear wall of the frame by having one of its end portions rotationally couped to the undersurface of the barrier arm and the rear wall of the frame.

While this invention has been described in detail with particular references to exemplary embodiments thereof, the exemplary embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention, as set forth in the following claims. Although relative terms such as "outer," "inner," "upper," "lower," "below," "above," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" another component, it can be directly on the other component or components may also be present therebetween. Moreover, when a component is component is referred to as being "coupled" to another component, it can be directly attached to the other component or intervening components may be present therebetween.

## Claims

1. A foldable portable barrier comprising:
a base;
a barrier arm pivotably coupled to the base for pivoting between a stowed position and a deployed position relative to the base;
a first side arm pivotably coupled to the base for pivoting between a stowed position over the barrier arm when stowed and a deployed position; and
a second side arm pivotably coupled to the base for pivoting between a stowed position over the first arm when stowed and a deployed position, wherein the barrier is portable.

2. The barrier of claim 1, further comprising:
a first locking member coupled to the barrier arm for engaging the first side arm when the first side arm and the barrier arm are in the deployed positions for retaining the first side arm and the barrier arm in their deployed positions; and
a second locking member coupled to the barrier arm for engaging the second side arm when the second side arm and the barrier arm are in the deployed positions for retaining the second side arm and the barrier arm in their deployed positions.

3. The barrier of any preceding claim, wherein each of said barrier arm, first side arm and second side arm are plate members.

4. The barrier of any preceding claim, further comprising an opening proximate a distal end of said barrier arm for defining a handle for lifting and pivoting said barrier plate to the deployed position.

5. The barrier of any preceding claim, wherein each of said first and second side arms include an end, wherein said end of each of said first and second side arms is ratcheted defining a series of upwardly extended spikes.

6. The barrier of claim 5, wherein when the barrier arm, the first side arm and the second side arm are in the deployed positions, a distal end of the barrier arm and the ratcheted ends of the first and second side arms face in the same direction, wherein said direction is a direction of expected impact.

7. The barrier of claim 5 or 6, further comprising a first cover for covering the ratcheted end of the first side arm and a second cover for covering the ratcheted end of the second side arm, wherein said first and second covers are configured for being pierced by said upwardly extending spikes upon impact by a vehicle.

8. The barrier of any preceding claim, wherein the first and second side arms comprise an opening, wherein when both the first and second side arms are in a stowed position, the openings are axially aligned for receiving a pin.

9. The barrier of any preceding claim, further comprising:
at least a first spring coupled to the first side arm and the base for assisting in pivoting the first side arm towards its deployed position; and
at least a second spring coupled to the second side arm and the base for assisting in pivoting the first side arm towards its deployed position.

10. The barrier of any preceding claim, further comprising at least a spring coupled to the barrier arm and the base for assisting in pivoting the barrier arm toward its deployed position.

11. The barrier of any preceding claim, wherein the base comprises:
a first side;
a second side opposite the first side;
a third side extending between the first and second sides; and
a fourth side opposite the third side and extending between the first and second sides, wherein a pair of openings are defined on the first side for receiving a pair of prongs from a palette jack or fork-lift for lifting and moving said barrier.

12. The barrier of claim 11, further comprising a pair of openings through the third side receiving a pair of prongs from a palette jack or fork-lift for lifting and moving said barrier.
